# EUROPEAN PATENT APPLICATION

(11) **EP 4 432 023 A1**
(43) Date of publication of application: **18.09.2024**
(21) Application number: 24163341.1
(22) Date of filing: 13.03.2024
(51) Int. Cl.: G05B 15/02, E06B 9/68

(54) **A DRIVING SYSTEM FOR ROLLER BLINDS, ROLLER SHUTTERS AND SIMILAR SOLAR PROTECTORS**

(30) Priority: 14.03.2023 IT 202300004818
(71) Applicant: Cherubini S.p.A., 25081 Bedizzole (BS) (IT)
(72) Inventor: SANCHEZ VIDAL, Francisco Javier, I-25081 Bedizzole, BRESCIA (IT)
(74) Representative: Pulieri, Gianluca Antonio

(57) **Abstract**

A shutter driving system (20) comprises a power unit (1) and an electronic control device (9). The control device (9) alternatively comprises primary storage means (7) suitable for storing said predefined set of control instructions (Ic) or primary storage means (7) on which a plurality of sets of control instructions (Ic) is store, which may be selected by means of a selection code (Cs). The system furthermore comprises an enabling device (30) that cooperates with the power unit (1) to make said predefined set of control instructions (Ic) or said selection code (Cs) available to the power unit (1).

## Description

### Field of the invention

The present invention is in the field of roller blinds, roller shutters and other similar solar protectors, and refers in particular to an electric shutter driving system.

### Prior art

Within such field, from a structural point of view the various specific applications are similar therebetween insofar as they all include a power unit attached on one side to a fixed support and on the other to a tubular casing whereupon the roller blind is wound, for example a roller shutter. Nevertheless, an enormous variety of power units is observed which differ from one another in order to satisfy certain application specific needs, for example the maximum rotational speed or the maximum torque delivered by the motor, as well as some ancillary functions such as safety functions and similar.

Such peculiarity forces manufacturers to offer a huge variety of power units thereby enormously complicating production and warehouse storage as well as the management of spare parts. Such complexity also impacts efforts to develop new devices insofar as intended improvement changes may not always be compatible with all of the models offered.

Embodiment examples of motor groups are illustrated in the documents US-A1-2019/071926, US-A1-2022/307318, US-A1-2010/097238, EP-A1-3219897 and US-A1-2018/168020.

### Object of the invention

The object of the present invention is to provide a shutter driving system which meets the needs of the field and at the same time overcomes the aforementioned drawbacks. This object is achieved by a driving system according to claim 1. The dependent claims describe additional advantageous embodiments of the invention.

### Brief description of the drawings

The features and advantages of the driving system according to the present invention will become apparent from the following description, given as a non-limiting example in accordance with the figures in the accompanying drawings, wherein:
- Figure 1 shows a power unit according to one embodiment of the present invention;

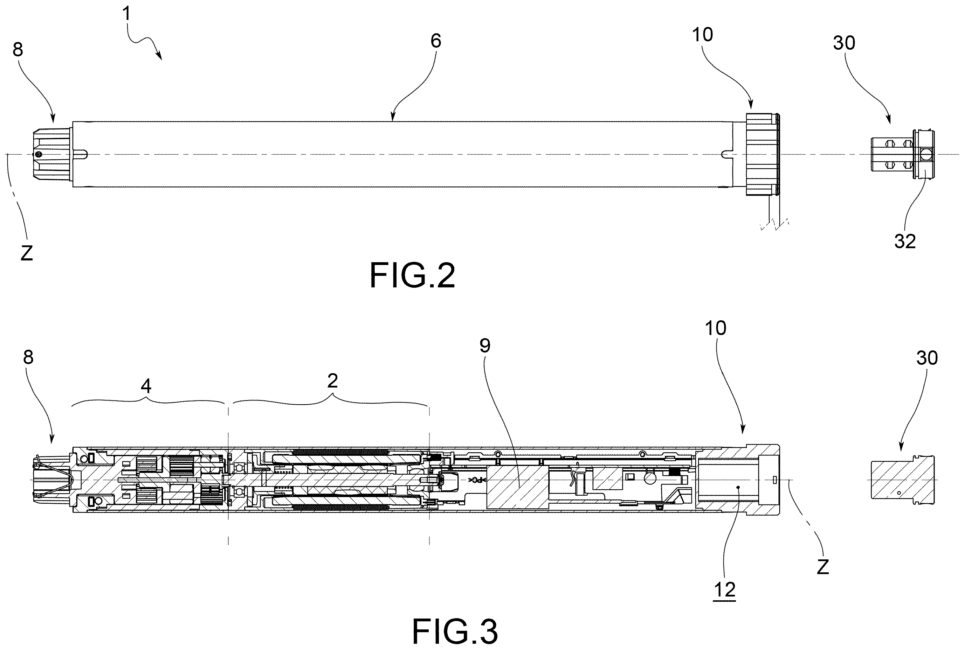

- Figure 2 represents a side view of a driving system according to one embodiment of the present invention;
- Figure 3 depicts a cross-sectional view of the driving system of Figure 2;
- Figure 4a is a schematic representation of the driving system according to one embodiment of the present invention;
- Figure 4b is a schematic representation of the driving system according to a further embodiment of the present invention;

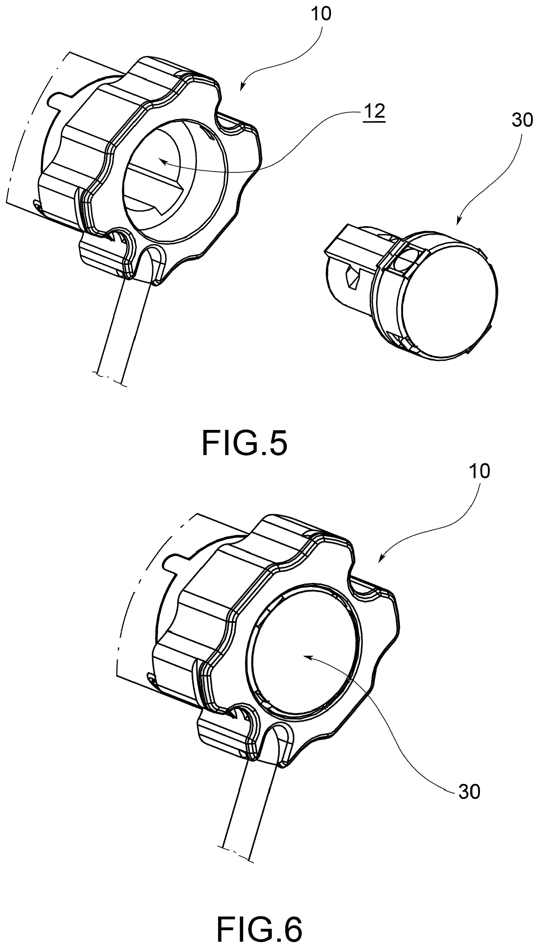

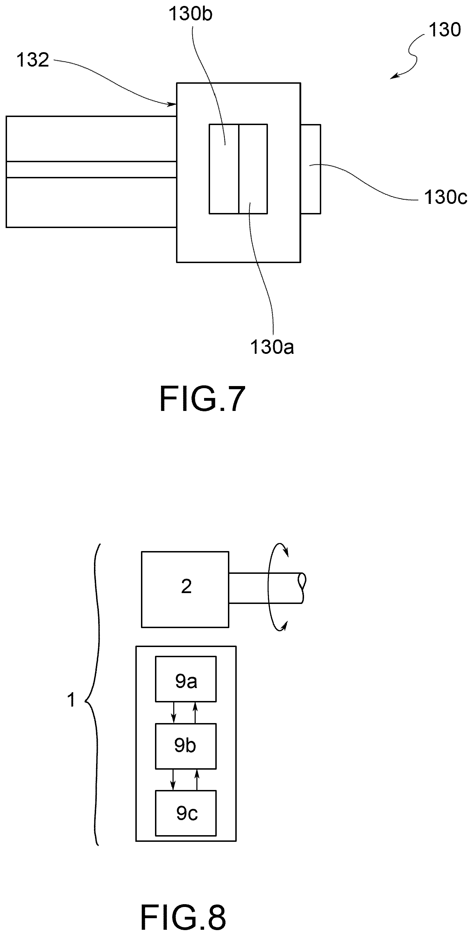

- Figure 5 shows the driving system in a configuration wherein an enabling device is uncoupled from the power unit;
- Figure 6 shows the driving system of Figure 5, in a configuration wherein the enabling device is coupled to the power unit.

### Detailed description of the invention

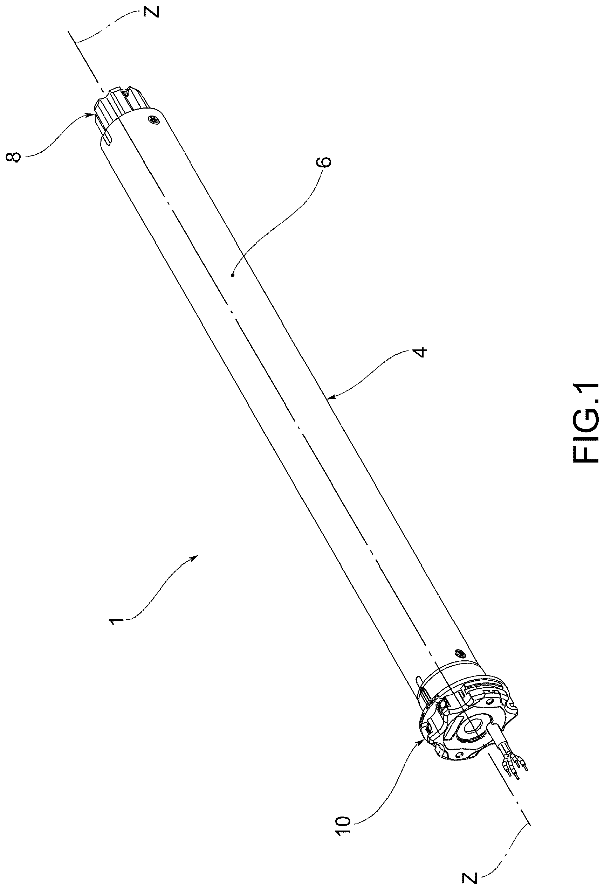

With reference to Figure 1, with the reference numeral 1 a power unit is indicated in the entirety thereof comprising a tubular casing 6, usually cylindrical, an electric motor 2, contained within the casing 6 and a kinematic mechanism 4, comprising a planetary gearbox, predominantly contained within the casing 6, connected to the electric motor 2 and provided with an output shaft 8 for mechanically connecting to the shutter, generally by means of the use of an adapter.

The power unit 1 furthermore comprises an electronic control device 9, preferably housed within the casing 6, operatively connected to the electric motor 2 for rotationally controlling it, and a connection head 10 applied to the casing 6, from the side opposite that wherefrom the output shaft 8 protrudes.

Normally, for the on-site assembly of the power unit 1, a fixed support is envisaged that is intended to be attached, for example by means of screws, to a fixed support wall, for example consisting of the side of a box whereinto the shutter is rolled or of a flange of a support frame of the blind. The connection head 10 is suitable for being connected to the fixed support.

Embodiments of such power units are shown in the International Applications WO-A1-2017/221087 and WO 2019/162912, in the name of the Applicant.

The firmware for the functioning of the electric motor consists of a predefined set of control instructions Ic that determine the functional characteristics of the motor, for example as it pertains to the speed-torque characteristic, the maximum rotational speed, connectivity and safety functions etc.

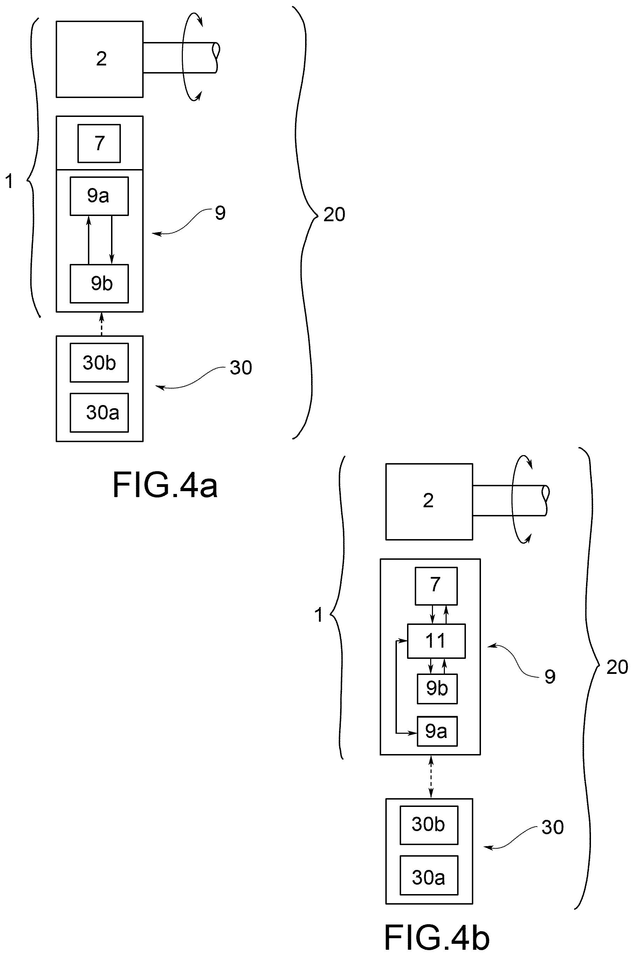

According to one embodiment of the invention (Figure 4a), the control device 9 comprises primary storage means 7 that are suitable for storing said predefined set of control instructions Ic.

Furthermore, the control device 9 comprises processing means 9a suitable for processing said predefined set of control instructions Ic and for sending control signals Sc to the electric motor 2; the processing means 9a are operatively connected to the primary storage means 7.

Furthermore, the control device 9 comprises receiving means 9b suitable for receiving said predefined set of control instructions Ic; the receiving means 9b are operatively connected to the processing means 9a and/or to the primary storage means 7.

According to one alternative embodiment of the invention (Figure 4b), the control device 9 comprises primary storage means 7 wherein a plurality of sets of control instructions Ic, wherein each set of control instructions Ic corresponds to an individual electric motor response.

The control device 9 furthermore comprises receiving means 9b suitable for receiving a selection code Cs for the selection of a predefined set of control instructions Ic within said plurality of sets of control instructions Ic.

In addition, the control device 9 comprises selection means 11 operatively connected to the receiving means 9b and to the primary storage means 7 and suitable for processing said selection code Cs in order to select said predefined set of control instructions from the plurality of sets of control instructions Ic.

The control device 9 furthermore comprises processing means 9a operatively connected to the selection means 11 and suitable for processing said predefined set of control instructions Ic and send control signals Sc to the electric motor 2.

For example, the primary storage means 7 comprise a ROM or EEPROM memory or a re-programable FLAHROM memory. For example, the processing means 9a and the selection means 11 comprise a microchip or an electronics board. For example, the receiving means 9b comprise an RFID reader or an NFC device or a cabled serial interface (SPI, I2C).

According to the invention, a shutter driving system 20 comprises the power unit 1 and an enabling device or key 30, that may be structurally detachable from the power unit 1 and that when engaged is suitable for cooperating with the power unit 1 to make said predefined set of control instructions Ic or said selection code Cs available to the power unit 1.

In other words, the enabling device 30 is suitable for being physically engaged or separated from the power unit 1, for example by means of coupling and uncoupling portions for the relative positioning of the enabling device 30 within the power unit 1. In an additional variant, the enabling device 30 interacts with the power unit 1 after being placed upon a surface of the power unit, for example at the connection head 10.

Furthermore, said enabling device 30 is capable of managing the set of control instructions Ic and the selection code Cs, memorizing or transmitting such control instructions to the power unit 1.

In particular, the enabling device 30 comprises secondary storage means 30a suitable for storing said control instructions Ic, comprising for example a ROM or EEPROM memory, a re-programable FLASHROM memory, and transmission means 30b suitable for transmitting said control instructions Ic to the control device 9 of the power unit 1, comprising for example an RFID transmitter, an NFC device or a serial driver. The secondary storage means 30a are operatively connected to the transmission means 30b.

The receiving means 9b of the control device 9 and the transmission means 30b of the enabling device 30 enable, for example, a contact transmission, such as for example of the plug & socket type, i.e., a plug that fits into a dedicated port, or a contactless transmission, such as a Wi-Fi, Bluetooth, radio transmission and similar, or by means of a proximity wireless transmitter.

The control instructions Ic, which constitute the firmware of the electric motor 2, comprise torque instructions Ica related to the torque supplied by the motor as a function of the shutter position or the direction of movement (up or down); for example, said torque instructions Ica are suitable for actuating the power unit in such a way as to obtain a slowdown in proximity to an end-of-stroke or a descent deceleration in order to recognize any obstacles and to avoid damage.

For example, said control instructions Ic comprise maximum speed instructions Icb related to the maximum rotational speed of the motor.

For example, said control instructions Ic, comprise safety instructions Ice related to the behavior of the motor when detecting obstacles, for example in proximity to an end-of-stroke.

For example, said control instructions Ic comprise end-of-stroke instructions Icd related to the definition of an electronic end-of-stroke.

For example, said control instructions Ic comprise connectivity instructions Ice related to the remote connection modes of the motor, for example by remote connection, by means of CH 433Mhz, Z-Wave, Wi-Fi and Matter radio signals.

According to a preferred embodiment of the invention, the connection head 10 of the power unit 1 comprises a cavity 12, and the enabling device 30 comprises, for example, a shell 32, for example cylindrical with steps, that is insertable into the cavity 12 to cooperate with the control device 9.

Preferably, the connection head 10 and the enabling device 30 comprise positioning means suitable for allowing inserting the enabling device 30 into the connection head 10 only in a single predefined relative angular position. For example, said relative positioning means comprise a groove or a recess within the cavity 12 and the shell 32 includes a rib or prominence that may be received within the respective groove or recess.

With the enabling device 30 functionally coupled to the control device 9, the predefined set of control instructions Ic or the selection code Cs are rendered available to the control device 9 which is then capable of actuating the electric motor 2 according to said predefined set of control instructions Ic.

With the aim of satisfying the multiple requirements of a user, it is necessary to offer the user a plurality of driving systems, wherein each driving system is characterized by a predefined performance, for example defined by a particular speed characteristic - torque curve or by a particular maximum speed, a particular function in the case of obstacles etc., according to the respective control instructions Ic.

According to the invention, all the driving systems of the plurality of driving systems include the use of the same power unit 1 and of a plurality of enabling devices 30, wherein each enabling device 30 is supplied with a respective set of control instructions Ic or with a selection code Cs. In such way, in coupling the single power unit 1 to the respective enabling device 30, a driving system is obtained that is capable of functioning according to the specific performance required by the user.

According to one embodiment of the invention, an enabling device 30 is supplied in the factory with a single set of control instructions Ic or a single selection code Cs, corresponding to a predefined power unit 1 performance.

According to a further embodiment of the invention, a plurality of control instructions Ic or a plurality of selection codes Cs are available to be purchased online, for example in an Appstore. The user may access the Appstore and purchase a specific set of control instructions Ic or a specific selection code Cs, corresponding to a desired power unit performance. Said specific set of control instructions Ic or said specific selection code Cs is loaded, for example wirelessly, into the enabling device 30. By means of the enabling device 30, the set of control instructions Ic or the selection code Cs is then made available to the power unit 1 according to that described above.

In an additional embodiment, an enabling device 30 is capable of managing sets of information at the input and at the output of the power unit 1. In other words, the enabling device 30 is capable of transmitting at the output sets of control instructions Ic and the selection code Cs and of receiving at the input sets of warnings, for example alarm and notifications.

In a further embodiment, the enabling device and the power unit 1 are in communication by means of a connectivity device that manages the exchange of information, for example the set of control instructions Ic from the enabling device and the alarm notifications from the power unit 1. In one further additional embodiment, the electric motor 2 comprises three components that are capable of managing three levels of different instructions:
- generic instructions, such as for example control instructions;
- instructions related to the specific application, such as for example control and connectivity instructions;
- instructions related the functional characteristics of the motor, for example related to the maximum rotational speed, connectivity and safety instructions.

Innovatively, the driving system according to the present invention satisfies the requirements of the field insofar as it makes available to the user a vast range of power units, each with the functional characteristics thereof, and overcomes the inconveniences mentioned with reference to the prior art insofar as it enables the manufacturer to use a single power unit in combination with a plurality of enabling devices.

Advantageously, this enables the manufacturer and the distributor thereof to keep only one power unit in stock and a plurality of enabling devices; the latter may nonetheless be sent to the work site after the assembly of the power units.

According to a further advantageous aspect, the user may easily change the type of driving system, in the case wherein the user is not satisfied with that which was previously chosen and installed in simply substituting the enabling device or in purchasing additional control instructions or additional selection codes.

It is clear that a person skilled in the field, in order to overcome contingent objections, may make modifications to the driving system described above, all of which are contained within the scope of protection as defined in the following claims.

## Claims

1. A driving system (20) for roller shutters comprising:
- a power unit (1) comprising an electric motor (2) mechanically connectable to the roller shutter and an electronic control device (9), operatively connected to the electric motor (2) for rotationally actuating it as a function of a predefined set of control instructions (Ic), wherein the control device (9) alternatively comprises:
i) primary storage means (7) suitable for storing said predefined set of control instructions (Ic), processing means (9a) suitable for processing said control instructions (Ic) and send control signals (Sc) to the electric motor (2) and operatively connected to the primary storage means (7), receiving means (9b) suitable for receiving said control instructions (Ic) and operatively connected to the processing means (9a) and/or to the primary storage means (7); or
ii) primary storage means (7) on which a plurality of sets of control instructions (Ic) is stored, receiving means (9b) suitable for receiving a selection code (Cs), selection means operatively connected to the receiving means (9b) and the primary storage means and suitable for processing said selection code (Cs) to select said predefined set of control instructions (Ic) from the plurality of sets of control instructions (Ic); processing means (9a) operatively connected to the selection means and suitable for processing said predefined set of control instructions (Ic) and send control signals (Sc) to the electric motor (2);
- an enabling device or key (30), structurally detachable from the power unit (1), comprising secondary storage means (30a) on which said predefined set of control instructions (lc) or said selection code (Cs) is stored, said enabling device (30) being physically engageable to the power unit (1) to make said predefined set of control instructions (lc) or said selection code (Cs) available to the power unit (1).

2. A driving system according to claim 1, wherein said secondary storage means (30a) comprise a ROM or EEPROM memory or a re-programable FLASHROM memory.

3. A driving system according to any one of the preceding claims, wherein the enabling device (30) comprises transmission means (30b) suitable for transmitting said predefined set of control instructions (Ic) or said selection code (Cs) to the control device (9) of the power unit (1).

4. A driving system according to claim 3, wherein said transmission means (30b) comprise an RFID transmitter or an NFC device or a serial driver.

5. A driving system according to any one of the preceding claims, wherein the receiving means (9b) of the control device (9) and the transmission means (30b) of the enabling device (30) are suitable for making a contact transmission or a contactless transmission, such as a proximity wireless transmission, for example.

6. A driving system according to any one of the preceding claims, wherein said predefined set of control instructions (Ic) comprises torque instructions (Ica) related to the torque supplied by the motor as a function of the shutter position or the direction of movement (up or down) or maximum speed instructions (Icb) related to the maximum rotational speed of the motor or safety instructions (Icc) related to the behavior of the motor when detecting obstacles or end-of-stroke instructions (Icd) related to the definition of an electronic end-of-stroke or connectivity instructions (Ice) related to the remote connection modes of the motor.

7. A driving system according to any one of the preceding claims, wherein a connection head (10) of the power unit (1) comprises a cavity (12) and the enabling device (30) is at least partially insertable into the cavity (12) to cooperate with the control device (9).

8. A driving system according to claim 7, wherein the connection head (10) and the enabling device (30) comprise relative positioning means suitable for allowing inserting the enabling device (30) into the connection head (10) only in a single predefined relative angular position.

9. A driving system according to any one of the preceding claims, wherein the enabling device (30) is suitable for transmitting at the output sets of control instructions Ic and the selection code Cs and for receiving at the input sets of warnings.

10. A method for actuating an electric motor (2) of a power unit (1) for roller shutters, comprising the following steps:
- providing an electronic control device (9) for the electric motor (2), arranged on board the power unit (1), provided with primary storage means (7) suitable for storing a predefined set of control instructions (Ic);
- providing an enabling device or key (30), structurally detachable from the power unit (1), provided with secondary storage means (30a) on which said predefined set of control instructions (lc) is stored;
- coupling said enabling device (30) and the power unit (1) for making said predefined set of control instructions (lc) available to the control device (9);
- sending, to the electric motor (2), control signals (Sc) processed by the control device (9) based on said set of control instructions (Ic).

11. A method for actuating an electric motor (2) of a power unit (1) for roller shutters, comprising the following steps:
- providing an electronic control device (9) for the electric motor (2), arranged on board the power unit (1), provided with primary storage means (7) on which a plurality of sets of control instructions (Ic) is loaded;
- providing an enabling device or key (30), structurally detachable from the power unit (1), provided with secondary storage means (30a) on which a selection code (Cs) associable with a predefined set of control instructions (lc) of said plurality of control instructions (lc) is stored;
- coupling said enabling device (30) and the power unit (1) for making said selection code (Cs) available to the control device (9);
- selecting, by means of the control device (9), said predefined set of control instructions (Ic) based on said selection code (Cs);
- sending, to the electric motor (2), control signals (Sc) processed by the control device (9) based on said set of control instructions (Ic).
